# EUROPEAN PATENT SPECIFICATION

(11) **EP 2 987 727 B1**
(45) Date of publication and mention of the grant of the patent: **04.10.2017**
(21) Application number: 15181368.0
(22) Date of filing: 18.08.2015
(51) Int. Cl.: B64D 25/14, F17C 1/00, B64D 25/16, B64F 5/00, B60R 21/26, F17C 5/06

(54) **HEATED INFLATION SYSTEM**
SYSTEM ZUM BEHEIZTEN AUFBLASEN
SYSTÈME DE GONFLAGE CHAUFFÉ

(30) Priority: 18.08.2014 US 201414461989
(43) Date of publication of application: 24.02.2016
(73) Proprietor: Goodrich Corporation, Charlotte, NC 28217-4578 (US)
(72) Inventor: DESHPANDE, Jayant V., Chandler, AZ Arizona 85248 (US); MCBURNETT III, Wilfred Ray, Chandler, AZ Arizona 85249 (US)
(74) Representative: Hull, James Edward

(56) References cited:
- US-A- 4 978 832
- US-A- 5 257 640
- US-A1- 2002 140 217
- US-A1- 2007 045 473

## Description

### BACKGROUND OF THE INVENTION

The subject matter disclosed herein relates to inflatable evacuation systems. More specifically, the subject disclosure relates to a system and method for controlling inflation of an inflatable evacuation system. US 2007/0045473 A1 discloses such a system with the features of the preamble of claim 1. A conventional inflation system for an aircraft evacuation slide includes a compressed gas cylinder with a few mechanical parts to regulate and direct gas flow to an inflatable slide system. A gas generator generally initiates the inflation system and is consumed during the inflation process. Inflation systems are routinely tested before its final installation in an aircraft. Multiple inflation tests may be performed before the inflation system is considered ready for deployment, thereby consuming multiple gas generators. Due to the cost of gas generators, preparing an installation system for deployment on board an aircraft can generate significant costs. Therefore, there is a desire to inflate inflatable evacuation systems without using gas generators.

### BRIEF DESCRIPTION OF THE INVENTION

According to one aspect, an inflation system for an inflatable device includes: an inflation cylinder configured to hold a gas mixture under pressure; a heating element configured to selectively heat the gas mixture; a temperature sensor configured to measure a temperature of the gas mixture; and a control module coupled to the heating element and the temperature sensor, the control module configured to control heating of the gas mixture based on the measured temperature, a mass of the gas mixture and a volume of the inflation cylinder.

According to another aspect, a method of inflating an inflatable device includes: providing an inflation cylinder that provides a gas mixture under pressure to the inflatable device; measuring a temperature of the gas mixture using a temperature sensor during heating of the gas mixture; and using a control module to control a heating of the gas mixture using the measured temperature, a volume of the cylinder and a mass of the gas mixture to inflate the inflatable device.

### BRIEF DESCRIPTION OF THE DRAWINGS

FIG. 1 shows an illustrative inflation system of the present invention according to one embodiment;
FIGS. 2A and 2B show a side view and a perspective view respectively of the heating element in one embodiment of the present invention; and
FIGS. 3A and 3B shows a side view and perspective view respectively of the heating element in another embodiment of the present invention.

### DETAILED DESCRIPTION OF THE INVENTION

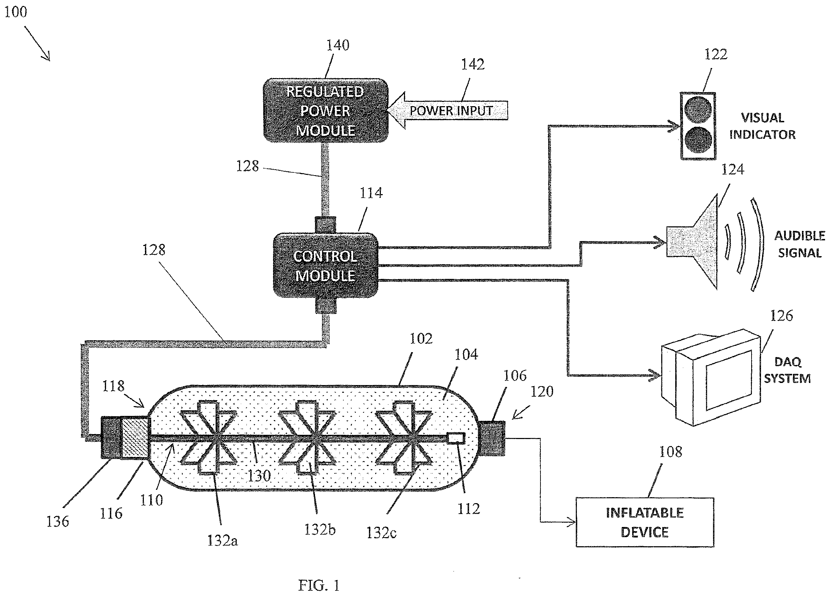

FIG. 1 shows an illustrative inflation system 100 of the present invention according to one embodiment. The inflation system 100 includes an inflation cylinder 102 configured to hold a gas mixture 104 that is under pressure. In one embodiment, the gas mixture 104 may be a combination of carbon dioxide and nitrogen gas blended at a ratio specific to requirements associated with an intended installation environment of the heated inflation system 100. In alternate embodiments, the gas mixture may be any mixture of gases suitable for use in the inflation system 100 blended at suitable ratios. The inflation cylinder 102 is sized according to requirements associated with an intended installation environment of the heated inflation system 100. The inflation cylinder 102 includes a regulator valve 106 configurable to maintain an outlet pressure of the gas mixture 104 exiting the inflation cylinder 102 to inflate an inflatable device 108. Additional components (not depicted) may be disposed between the regulator valve 106 and the inflatable device 108, such as tubing, an aspirator, and other elements known in the art. The inflatable device 108 may be, for example, a slide, raft, or slide/raft combination. The heated inflation system 100 and the inflatable device 108 may be installed in a packed slide system of an aircraft (not depicted).

A heating element 110 may be disposed within the inflation cylinder 102 to heat the gas mixture 104. A temperature sensor 112 may be disposed within the inflation cylinder 102 to sense a temperature of the gas mixture 104. In various embodiments, the temperature sensor 112 is disposed at an end of the heating element and thermally protected from the heating element via insulation (not shown). The heating element 110 may be implemented as one or more flexible heaters, such as polyimide heaters, silicone rubber heaters, heating tape, or mica heaters. Alternatively, the heating element 110 may be implemented as an insertion heater, an immersion heater, a cartridge heater, or other heater type known in the art. A control module 114 is configured to regulate heat applied by the heating element 110 to the gas mixture 104 based on a measured temperature from the temperature sensor 112, a volume of the inflation cylinder 102 and mass ratios of the gas mixture 104, as discussed below.

The heating element 110 is in direct contact with the gas mixture 104 and therefore may heat the gas mixture 104 directly using any or all of conduction, convection and radiation. In one embodiment, the heating element 110 includes a cylindrical rod 130 and fins 132a, 132b and 132c placed at axially-separated locations along the cylindrical rod 130. The fins 132a, 132b and 132c are heated along with the cylindrical rod 130 during the heating process. The fins 132a, 132b and 132c provide an increased surface area of the heating element 110 thereby increasing a rate at which heat may be transferred to the gas mixture 104. Additionally, the fins 132a, 132b and 132c extend away from the longitudinal axis of the cylindrical rod 130, thereby enabling direct heating of the gas mixture over a greater volume than would be heated using the cylindrical rod 130 alone. The heating element 110 may include aluminum, steel, other highly thermally conductive alloys, or a suitable combination thereof. Although three fins 132a, 132b and 132c are shown for illustrative purposes, any number of fins may be employed in alternate embodiments.

The heating element 110 and temperature sensor 112 may be coupled to the control module 114 through a port 116 in the inflation cylinder 102. In the embodiment of FIG. 1, the port 116 is separately located from the regulator valve 106. The regulator valve 106 may be located at a first end 120 of the inflation cylinder 102, while the port 116 is located at a second end 118 of the inflation cylinder 102 opposite the first end 120. Wiring the heating element 110 and temperature sensor 112 through the port 116 rather than through the regulator valve 106 may enable use of an existing regulator valve 106 without redesign to support internal heating of the inflation cylinder 102 and avoids obstruction of gas flow out the inflation cylinder 102 via the regulator valve 106.

In one embodiment, the heating element 110 may be connected to the inflation cylinder 102 using a quick disconnect device 136. The quick disconnect device 163 may allow insertion and removal of the heating element 110 and the inflation cylinder 102, thereby allowing replacement of components such as the heating element 110, refilling of the inflation cylinder 102 with a gas mixture 104 and reuse of the inflation system 100 over multiple inflation processes.

Control module 114 controls various aspects of the inflation system 100. The control module 114 is coupled to the heating element 110 and a regulated power module 140. A high durability harness 128 may be used to provide power between the power module 140 and the control module 114 as well as between the control module 114 and the heating element 110. The regulated power module 140 receives and conditions input power 142 to power the control module 114. The input power 142 may be provided from an aircraft power bus or a battery system (not depicted). The control module 114 may determine an amount of power to draw from the power module 140 in order to perform various functions such as heating the heating element 110. The control module 114 may increase or decrease the amount of power drawn from the power module 126 based on various calculations described herein.

The control module 114 is also in communication with a visual indicator 122, an audible indicator 124 and a data acquisition system 126. The control module 114 controls the visual indicator 122 to provide a status of the inflation system 100. For example, the visual indicator 122 may illuminate a green light when no fault is detected in the inflation system and a red light when a fault is detected in the inflation system, although any color combination may be used. The visual indicator 122 may be located in close proximity to the inflation cylinder 102 or at a remote location, such as within an aircraft cockpit and/or a flight attendant panel (FAP). Additionally, the control module 114 may control an audible indicator 124 to produce an audible signal. In one embodiment, an audible signal may indicate an occurrence of a fault. In another embodiment, the audible signal may indicate that the inflation system 100 is ready for deployment. The control module 114 may further be in communication with a data acquisition system 126. Data may be displayed and/or input at the data acquisition system 126.

Prior to operation of the inflation assembly 100, a volume of the inflation cylinder 102 and a composition of the gas mixture 104 including a mass of each component of the gas mixture 104 (e.g., mass of CO₂ and mass of N₂) are entered into the control module 114 via the data acquisition system 126.

Upon activation of the inflation assembly 100, temperature of the gas mixture is monitored using temperature measurements from the temperature sensor 102. The temperature measurements, the volume of the inflation cylinder 102 and the composition of the gas mixture 104 are used to determine an outlet pressure of the gas mixture at the regulator valve 106. The ideal gas law (*PV* = *nRT*) may be used to calculate outlet pressure, wherein *V* is the volume of the inflation cylinder 102, *n* is given by the input masses of the gas mixture 104, *T* is the measurement of temperature obtained using the temperature sensor 112 and *R* is the ideal gas constant. The calculated outlet pressure may further be used to determine a rate of inflation of the inflatable device 108.

The control module 114 may therefore increase a temperature of the heating element 110 or decrease of temperature of the heating element 110 based on the determined outlet pressure. In addition, the control module 114 may control the amount of power drawn from the power module 140 in order to increase or decrease the temperature of the heating element 110 to thereby maintain an outlet pressure and/or an inflation rate of the inflatable device 108 at a selected pressure value and/or inflation rate value.

The control module 114 therefore provides closed loop control of the inflation system 100, including the ability to turn on/shut down the inflation system 100, controlling an amount of power drawn from the power module 140, controlling a temperature and pressure of the gas mixture 104, and controlling various safeguards of the inflation system 100. Additionally, the control module 114 may be responsive to a reset input 124 which may be used to reinitialize the control module 114. The reset input 124 may be provided by a button, switch, or remote command from an aircraft bus (not depicted).

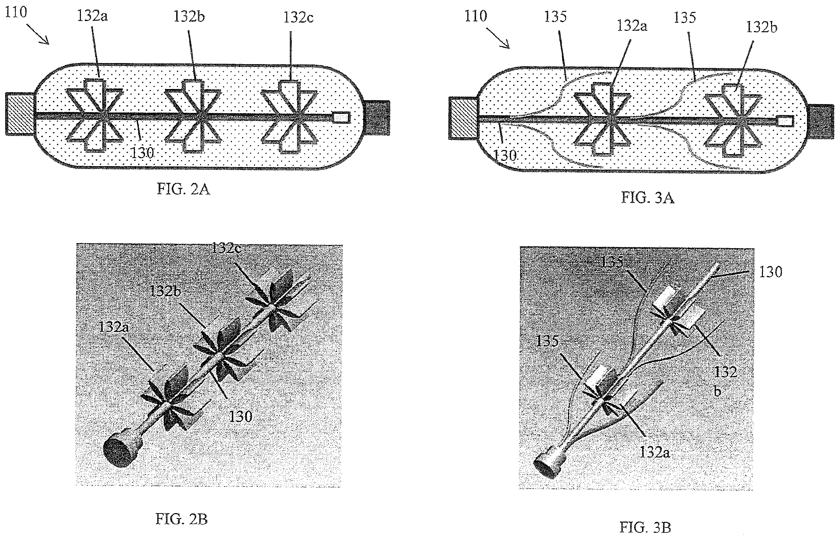

FIGS. 2A and 2B show a side view and a perspective view respectively of the heating element 110 in one embodiment of the present invention. The heating element 110 is shown including the cylindrical rod 130 and fins 132a, 132b and 132c. FIGS. 3A and 3B show a side view and perspective view respectively of the heating element 110 in another embodiment of the present invention. The heating element 110 includes the cylindrical rod 130 and fins 132a and 132b. The heating element 110 further includes wires 135 that extend outward from the cylindrical rod and along the axis of the cylindrical rod. The wires 135 provide heating to various locations within the inflation cylinder 102, thereby increasing efficiency for heat transfer into the gas mixture 104.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. An inflation system (100) for an aircraft evacuation slide (108), comprising:
an inflation cylinder (102) configured to hold a gas mixture (104) under pressure;
a temperature sensor (112) configured to measure a temperature of the gas mixture (104); and
a control module (114)
**characterized in that** the inflation system further comprises a heating element (110) configured to selectively heat the gas mixture (104) and **in that** the control module (114) is coupled to the heating element (110) and the temperature sensor (112), the control module (114) being configured to control heating of the gas mixture (104) based on the measured temperature, a mass of the gas mixture (104) and a volume of the inflation cylinder (102).

2. The inflation system (100) of claim 1, wherein the control module (114) is further configured to control the heating of the gas mixture (104) to obtain a selected outlet pressure at a regulator valve (106) of the inflation cylinder (102).

3. The inflation system (100) of claim 2, wherein the selected outlet pressure is determined using the ideal gas law based on the measured temperature, the mass of the gas mixture (104) and the volume of the inflation cylinder (102).

4. The inflation system (100) of any of claims 1 to 3, wherein the control module (114) is further configured to control an amount power drawn from a power module (140) to provide a selected temperature at the heating element (110).

5. The inflation system (100) of any preceding claim, wherein the heating element (110) includes a cylindrical rod (130) having at least one feature (132a,132b,132c,135) extending away from a longitudinal axis of the rod (130) to provide additional surface area of the heating element (110) for heating the gas mixture (104).

6. The inflation system (100) of claim 5, wherein the at least one feature includes a fin (132a,132b,132c) and/or a wire (135).

7. The inflation system (100) of any preceding claim, wherein the control module (114) is further configured to alter an amount of heat at the heating element (110) based on a comparison of the outlet pressure to a selected pressure value.

8. The inflation system (100) of any preceding claim, wherein the control module (114) is further configured to provide a signal based on a condition of the inflation system (100).

9. A method of inflating an aircraft evacuation slide (108), comprising:
providing an inflation cylinder (102) that provides a gas mixture (104) under pressure to the inflatable device (108);
measuring a temperature of the gas mixture (104) using a temperature sensor (112) during heating of the gas mixture (104); and
using a control module (114) to control a heating of the gas mixture (104) using the measured temperature, a volume of the cylinder (102) and a mass of the gas mixture (104) to inflate the inflatable device (108).

10. The method of claim 9, further comprising controlling the heating of the gas mixture (104) to obtain a selected outlet pressure at a regulator valve (106) of the inflation cylinder (102).

11. The method of claim 10, further comprising determining the selected outlet pressure using the ideal gas law based on the measured temperature, the mass of the gas mixture (104) and the volume of the inflation cylinder (102).

12. The method of any of claims 9 to 11, further comprising controlling an amount power drawn from a power module (140) to provide a selected temperature at a heating element (110).

13. The method of any of claims 9 to 12, further comprising heating the gas mixture (104) using a or the heating element (110) including a cylindrical rod (130) having at least one feature (132a,132b,132c,135) extending away from a longitudinal axis of the rod (130) to provide additional surface area of the heating element (110) for heating the gas mixture (104).

14. The method of claim 13, wherein the at least one feature includes a fin (132a,132b,132c) and/or a wire (135).

15. The method of any of claims 9 to 14, further comprising altering an amount of heat at a or the heating element (110) based on a comparison of the outlet pressure to a selected pressure value.

## Patentansprüche

1. Aufblassystem (100) für eine Flugzeugnotrutsche (108), umfassend:
einen Aufblaszylinder (102), der konfiguriert ist, ein Gasgemisch (104) unter Druck zu halten;
einen Temperatursensor (112), der konfiguriert ist, eine Temperatur des Gasgemischs (104) zu messen; und
ein Steuermodul (114)
**dadurch gekennzeichnet, dass** das Aufblassystem ferner ein Heizelement (110) umfasst, das konfiguriert ist, das Gasgemisch (104) selektiv zu erhitzen, und dass das Steuermodul (114) an das Heizelement (110) und den Temperatursensor (112) gekoppelt ist, wobei das Steuermodul (114) konfiguriert ist, das Erhitzen des Gasgemischs (104) basierend auf der gemessenen Temperatur, einer Masse des Gasgemischs (104) und einem Volumen des Aufblaszylinders (102) zu steuern.

2. Aufblassystem (100) nach Anspruch 1, wobei das Steuermodul (114) ferner konfiguriert ist, das Erhitzen des Gasgemischs (104) zu steuern, um einen ausgewählten Auslassdruck an einem Regelventil (106) des Aufblaszylinders (102) zu erhalten.

3. Aufblassystem (100) nach Anspruch 2, wobei der ausgewählte Auslassdruck unter Verwendung des idealen Gasgesetzes basierend auf der gemessenen Temperatur, der Masse des Gasgemischs (104) und dem Volumen des Aufblaszylinders (102) bestimmt wird.

4. Aufblassystem (100) nach einem der Ansprüche 1 bis 3, wobei das Steuermodul (114) ferner konfiguriert ist, eine Leistungsmenge, die einem Leistungsmodul (140) entnommen wird, zu steuern, um eine ausgewählte Temperatur am Heizelement (110) bereitzustellen.

5. Aufblassystem (100) nach einem der vorhergehenden Ansprüche, wobei das Heizelement (110) einen zylindrischen Stab (130) mit mindestens einem Merkmal (132a, 132b, 132c, 135), das sich von einer Längsachse des Stabs (130) weg erstreckt, beinhaltet, um zusätzlichen Oberflächenbereich des Heizelements (110) zum Erhitzen des Gasgemischs (104) bereitzustellen.

6. Aufblassystem (100) nach Anspruch 5, wobei das mindestens eine Merkmal einen Flügel (132a, 132b, 132c) und/oder einen Draht (135) beinhaltet.

7. Aufblassystem (100) nach einem der vorhergehenden Ansprüche, wobei das Steuermodul (114) ferner konfiguriert ist, eine Wärmemenge am Heizelement (110) basierend auf einem Vergleich des Auslassdrucks mit einem ausgewählten Druckwert zu ändern.

8. Aufblassystem (100) nach einem der vorhergehenden Ansprüche, wobei das Steuermodul (114) ferner konfiguriert ist, ein Signal basierend auf einer Bedingung des Aufblassystems (100) bereitzustellen.

9. Verfahren zum Aufblasen einer Flugzeugnotrutsche (108), umfassend:
Bereitstellen eines Aufblaszylinders (102), der ein Gasgemisch (104) unter Druck der aufblasbaren Vorrichtung (108) bereitstellt;
Messen einer Temperatur des Gasgemischs (104) unter Verwendung eines Temperatursensors (112) während des Erhitzens des Gasgemischs (104); und
Verwenden eines Steuermoduls (114), um ein Erhitzen des Gasgemischs (104) unter Verwendung der gemessenen Temperatur, eines Volumens des Zylinders (102) und einer Masse des Gasgemischs (104) zu steuern, um die aufblasbare Vorrichtung (108) aufzublasen.

10. Verfahren nach Anspruch 9, ferner Folgendes umfassend: Steuern des Erhitzens des Gasgemischs (104), um einen ausgewählten Auslassdruck an einem Regelventil (106) des Aufblaszylinders (102) zu erhalten.

11. Verfahren nach Anspruch 10, ferner Folgendes umfassend: Bestimmen des ausgewählten Auslassdrucks unter Verwendung des idealen Gasgesetzes basierend auf der gemessenen Temperatur, der Masse des Gasgemischs (104) und des Volumens des Aufblaszylinders (102).

12. Verfahren nach einem der Ansprüche 9 bis 11, ferner Folgendes umfassend: Steuern einer Leistungsmenge, die einem Leistungsmodul (140) entnommen wird, um eine ausgewählte Temperatur an einem Heizelement (110) bereitzustellen.

13. Verfahren nach einem der Ansprüche 9 bis 12, ferner Folgendes umfassend: Erhitzen des Gasgemischs (104) unter Verwendung eines oder des Heizelements (110), das einen zylindrischen Stab (130) mit mindestens einem Merkmal (132a, 132b, 132c, 135), das sich von einer Längsachse des Stabs (130) weg erstreckt, beinhaltet, um zusätzlichen Oberflächenbereich des Heizelements (110) zum Erhitzen des Gasgemischs (104) bereitzustellen.

14. Verfahren nach Anspruch 13, wobei das mindestens eine Merkmal einen Flügel (132a, 132b, 132c) und/oder einen Draht (135) beinhaltet.

15. Verfahren nach einem der Ansprüche 9 bis 14, ferner Folgendes umfassend: Ändern einer Wärmemenge an einem oder dem Heizelement (110) basierend auf einem Vergleich des Auslassdrucks mit einem ausgewählten Druckwert.

## Revendications

1. Système de commande (100) pour un toboggan d'évacuation d'aéronef (108), comprenant :
un cylindre de gonflage (102) configuré pour maintenir un mélange de gaz (104) sous pression ;
un capteur de température (112) configuré pour mesurer une température du mélange de gaz (104) ; et
un module de commande (114)
**caractérisé en ce que** le système de gonflage comprend en outre un élément chauffant (110) configuré pour chauffer sélectivement le mélange de gaz (104) et **en ce que** le module de commande (114) est couplé à l'élément chauffant (110) et au capteur de température (112), le module de commande (114) étant configuré pour commander le chauffage du mélange de gaz (104) sur la base de la température mesurée, d'une masse du mélange de gaz (104) et d'un volume du cylindre de gonflage (102).

2. Système de gonflage (100) selon la revendication 1, dans lequel le module de commande (114) est configuré en outre pour commander le chauffage du mélange de gaz (104) pour obtenir une pression de sortie sélectionnée au niveau d'une vanne de régulation (106) du cylindre de gonflage (102).

3. Système de gonflage (100) selon la revendication 2, dans lequel la pression de sortie sélectionnée est déterminée en utilisant la loi des gaz parfaits sur la base de la température mesurée, de la masse du mélange de gaz (104) et du volume du cylindre de gonflage (102).

4. Système de gonflage (100) selon l'une quelconque des revendications 1 à 3, dans lequel le module de commande (114) est configuré en outre pour commander une quantité de puissance tirée d'un module de puissance (140) pour fournir une température sélectionnée au niveau de l'élément chauffant (110).

5. Système de gonflage (100) selon une quelconque revendication précédente, dans lequel l'élément chauffant (110) comprend une tige cylindrique (130) ayant au moins une caractéristique (132a, 132b, 132c, 135) s'étendant depuis un axe longitudinal de la tige (130) pour fournir une surface supplémentaire de l'élément chauffant (110) pour chauffer le mélange de gaz (104).

6. Système de gonflage (100) selon la revendication 5, dans lequel l'au moins une caractéristique comprend une ailette (132a, 132b, 132c) et/ou un fil (135).

7. Système de gonflage (100) selon une quelconque revendication précédente, dans lequel le module de commande (114) est configuré en outre pour modifier une quantité de chaleur au niveau de l'élément chauffant (110) sur la base d'une comparaison de la pression de sortie avec une valeur de pression sélectionnée.

8. Système de gonflage (100) selon une quelconque revendication précédente, dans lequel le module de commande (114) est configuré en outre pour fournir un signal sur la base d'un état du système de gonflage (100).

9. Procédé de gonflage d'un toboggan d'évacuation d'aéronef (108), comprenant:
la fourniture d'un cylindre de gonflage (102) qui fournit un mélange de gaz (104) sous pression au dispositif gonflable (108) ;
la mesure d'une température du mélange de gaz (104) en utilisant un capteur de température (112) pendant le chauffage du mélange de gaz (104) ; et
l'utilisation d'un module de commande (114) pour commander un chauffage du mélange de gaz (104) en utilisant la température mesurée, un volume du cylindre (102) et une masse du mélange de gaz (104) pour gonfler le dispositif gonflable (108).

10. Procédé selon la revendication 9, comprenant en outre la commande du chauffage du mélange de gaz (104) pour obtenir une pression de sortie sélectionnée au niveau d'une vanne de régulation (106) du cylindre de gonflage (102).

11. Procédé selon la revendication 10, comprenant en outre la détermination de la pression de sortie sélectionnée en utilisant la loi des gaz parfaits sur la base de la température mesurée, de la masse du mélange de gaz (104) et du volume du cylindre de gonflage (102).

12. Procédé selon l'une quelconque des revendications 9 à 11, comprenant en outre la commande d'une quantité de puissance tirée d'un module de puissance (140) pour fournir une température sélectionnée au niveau d'un élément chauffant (110).

13. Procédé selon l'une quelconque des revendications 9 à 12, comprenant en outre le chauffage du mélange de gaz (104) en utilisant un ou l'élément chauffant (110) comprenant une tige cylindrique (130) ayant au moins une caractéristique (132a, 132b, 132c, 135) s'étendant depuis un axe longitudinal de la tige (130) pour fournir une surface supplémentaire de l'élément chauffant (110) pour chauffer le mélange de gaz (104).

14. Procédé selon la revendication 13, dans lequel l'au moins une caractéristique comprend une ailette (132a, 132b, 132c) et/ou un fil (135).

15. Procédé selon l'une quelconque des revendications 9 à 14, comprenant en outre une modification d'une quantité de chaleur au niveau d'un ou de l'élément chauffant (110) sur la base d'une comparaison de la pression de sortie avec une valeur de pression sélectionnée.
